# EUROPEAN PATENT APPLICATION

(11) **EP 1 031 941 A1**
(43) Date of publication of application: **30.08.2000**
(21) Application number: 99944787.3
(22) Date of filing: 22.09.1999
(51) Int. Cl.: G06T 1/00, G06T 13/00

(54) **MOVING IMAGE DISPLAY METHOD**

(30) Priority: 22.09.1998 JP 26806298
(71) Applicant: Kabushiki Kaisha NTTAD, Shibuya-ku, Tokyo 150-8314 (JP)
(72) Inventor: KAWANO, Masahiro Inner Brain Kabushiki Kaisha, Shinjuku-ku, Tokyo 160-0022 (JP); INOUE, Yutaka Inner Brain Kabushiki Kaisha, Shinjuku-ku, Tokyo 160-0022 (JP)
(74) Representative: von Puttkamer, Nikolaus
(86) International application number: JP9905193
(87) International publication number: WO0017817

(57) **Abstract**

In displaying a moving picture with a small number of frames, the motion becomes discontinuous and unnatural.

A series of motions are classified into small segments D1 and D2 in accordance with the type of motion, and first frames D1S and D2S and last frames D1E and D2E of the respective small segments are displayed without any omission.

## Description

### 1. Technical Field

The present invention relates to a moving picture display method of displaying the motion of a person as a moving picture on the CRT of a personal computer or the like.

### 2. Background Art

As a method of displaying a moving picture, a moving picture display method has conventionally been known in which frames as still images representing motion states every predetermined time are successively displayed to make the viewer recognize them as a moving picture using the optical illusion. According to televisions, movies, or moving picture standards such as MPEG, 25 to 30 frames are successively displayed every second so as to make the viewer recognize them as the moving picture of a smooth motion.

In recent years, a charming animation character is displayed on the CRT of a personal computer regardless of an active application so that the operator enjoys the character. To display such character, the load of a CPU (arithmetic element) must be reduced. To stably reproduce the motion of a person or animation as a smooth motion on an existing personal computer, about five frames must be displayed every second.

When the image of an actual person is sensed as a character instead of an animation character, about five frames per second are extracted from the sensed frames, and the extracted frames are successively displayed to display the sensed character as a moving picture, the posture greatly changes between the frames. For example, if a motion of holding and raising an object is displayed without displaying a frame representing that an object is held, a frame after the object is held and raised is displayed subsequent to a frame before the object is held. The viewer recognizes this motion as if the object jumped into the hand when the hand comes close to the object. This results in an unnatural moving picture. The unnaturalness can be eliminated by increasing the number of frames displayed per second. However, owing to the above reason, the number of frames displayed per second is limited and cannot be increased.

The present invention has been made to overcome the conventional drawbacks, and has as its object to provide a moving picture display method which eliminates any unnatural motion even with a small number of frames displayed per second.

### 3. Disclosure of Invention

To solve the above problem, according to the present invention, a method of displaying a motion of a person as a moving picture by successively displaying, every predetermined time, frames serving as still images representing motion states of the person successively sensed every predetermined time is characterized by comprising the step of classifying temporal state changes of the person in a series of motions into small segments in accordance with the type of motion, and displaying at least a frame representing the first motion state of each small segment and a frame representing the last motion state.

For example, a series of above-mentioned motions when an object is raised are made up of the first small segment in which the hand comes close to the object, and the second small segment in which the hand raises the object while holding it. To display the series of motions with a smaller number of frames, the first and last frames of each small segment are displayed without any omission. That is, for the first small segment, the first frame in which the hand is apart from the object and the last frame in which the hand moves to the position of the object are prepared, and the two frames are complemented by, e.g., 0.2-sec frames. For the second small segment, the first frame in which the hand holds the object and the last frame in which the hand raises the object to a predetermined height while holding the object are prepared, and the two frames are similarly complemented by, e.g., 0.2-sec frames. In this manner, the first and last frames of each small segment are displayed without any omission. The motion does not become discontinuous in shifting the motion from a given small segment to the next small segment, and does not become unnatural.

### 4. Brief Description of Drawing

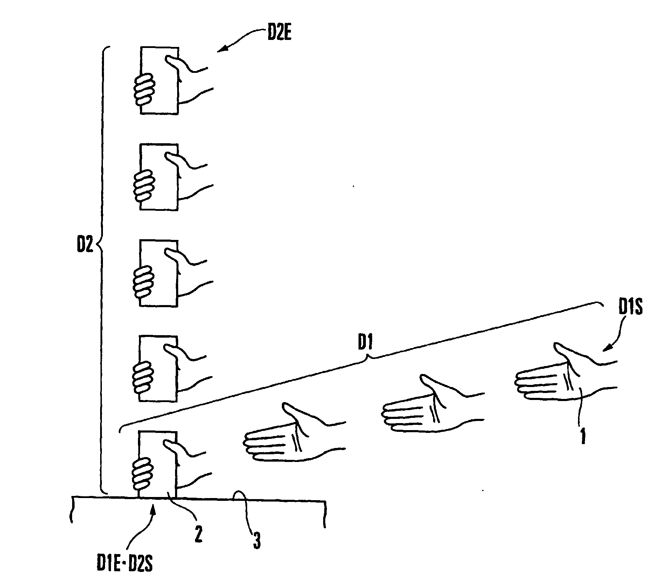

Fig. 1 is a view for explaining an image display method according to an embodiment of the present invention.

### 5. Best Mode of Carrying Out the Invention

Fig. 1 shows a series of motions when a hand 1 raises a can 2 on a table 3. In displaying the series of motions as a moving picture by successive frame display, these motions are classified into small segments in accordance with the type of motions. In Fig. 1, a motion of holding the can 2 with the hand 1 is set as a first small segment D1, and a motion of raising the held can 2 is set as a second small segment. In the first small segment, a state in which the hand 1 is apart from the can 2 by a predetermined distance is set as a first frame D1S of the first small segment D1, and a state in which the hand 1 holds the can 2 is set as a last frame D1E of the first small segment D1. Two frames are inserted between the two frames D1S and D1E at an interval of about 0.2 sec, thereby complementing the frames. In a second small segment D2, the same frame as the last frame D1E of the first small segment is set as a first frame D2S, and a state in which the hand 1 raises the can 2 to a predetermined height while holding the can 2 is set as a last frame D2E of the second small segment. Similar to the first segment D1, three frames are inserted between the two frames D2S and D2E at an interval of about 0.2 sec, thereby complementing the frames. In shifting from the first small segment D1 to the second small segment D2, the interval of about 0.2 sec need not be set. In practice, the last frame D1E of the first small segment D1 and the first frame D2S of the second small segment D2 are not displayed one by one, and one frame serves as both the frames D1E and D2S.

In this embodiment, a motion of bending stretching fingers and actually holding the can 2 is ignored, and the hand 1 holds the can 2 immediately when it reaches the position of the can 2. If the hand 1 is to be zoomed in so as to display a motion of bending fingers, a new small segment, which has the first frame representing that the hand 1 reached the position of the can 2 and the fingers still stretch, and the last frame representing that the fingers bend to completely hold the can 2, is inserted between the first and second small segments D1 and D2.

This embodiment has exemplified the motion of a hand as part of the body, and can also be applied to the motion of the whole body such as walking. Alternatively, only a person's image may be extracted from the background to create a frame so as to use the image as an icon for a personal computer or the like. In this case, a person is sensed by a so-called blue matter process, and the person's image undergoes image processing by a computer to extract only the person's image.

### 6. Industrial Applicability

As is apparent from the above description, the present invention prevents a motion from becoming discontinuous and unnatural in displaying a moving picture with a small number of frames.

## Claims

1. A moving picture display method of displaying a motion of a person as a moving picture by successively displaying, every predetermined time, frames serving as still images representing motion states of the person successively sensed every predetermined time, characterized by comprising the step of classifying temporal state changes of the person in a series of motions into small segments in accordance with the type of motion, and displaying at least a frame representing the first motion state of each small segment and a frame representing the last motion state.
